# EUROPEAN PATENT APPLICATION

(11) **EP 4 804 098 A1**
(43) Date of publication of application: **09.09.2026**
(21) Application number: 24885630.4
(22) Date of filing: 25.10.2024
(51) Int. Cl.: G06Q 20/08, G06Q 40/04

(54) **INFORMATION PROCESSING METHOD, INFORMATION PROCESSING DEVICE, AND PROGRAM**

(30) Priority: 30.10.2023 US 202363546346 P
(71) Applicant: Panasonic Intellectual Property Management Co., Ltd., Kadoma-shi, Osaka 571-0057 (JP)
(72) Inventor: KOUNO, Yoshinobu, Kadoma-shi, Osaka 571-0057 (JP); YAMAMOTO, Kakuya, Kadoma-shi, Osaka 571-0057 (JP)
(74) Representative: Appelt, Christian W.
(86) International application number: PCT/JP2024/038233
(87) International publication number: WO 2025/094857

(57) **Abstract**

An information processing method includes: obtaining first transaction record information indicating a record of a transaction involving a transaction item that is performed using a first non-fungible token (NFT), the first NFT indicating that the transaction involving the transaction item is to be performed in a first unit (S420); obtaining second transaction record information indicating a record of a transaction involving the transaction item that is performed using a second NFT, the second NFT indicating that the transaction involving the transaction item is to be performed in a second unit different from the first unit (S440); and determining a market rate between the first unit and the second unit, based on the first transaction record information and the second transaction record information (S450).

## Description

### [Technical Field]

The present disclosure relates to an information processing method, an information processing device, and a program.

### [Background Art]

Patent Literature (PTL) 1 discloses a data management system that performs transactions involving artworks and the like using a blockchain technology.

### [Citation List]

### [Patent Literature]

[PTL 1] Japanese Unexamined Patent Application Publication No. 2024-091805

### [Summary of Invention]

### [Technical Problem]

When performing a transaction involving an item subject to the transaction (hereinafter referred to as a "transaction item") across a plurality of blockchains, the unit of the transaction item may differ between the blockchains, which could hinder the appropriate conduct of transactions. The same is true for transactions using distributed ledger technologies other than blockchains.

In view of the above, the present disclosure provides an information processing method, an information processing device, and a program capable of assisting in performing appropriate transactions even when mutually different units are used.

### [Solution to Problem]

An information processing method according to an aspect of the present disclosure includes: obtaining first transaction record information indicating a record of a transaction involving a transaction item that is performed using a first non-fungible token (NFT), the first NFT indicating that the transaction involving the transaction item is to be performed in a first unit; obtaining second transaction record information indicating a record of a transaction involving the transaction item that is performed using a second NFT, the second NFT indicating that the transaction involving the transaction item is to be performed in a second unit different from the first unit; and determining a market rate between the first unit and the second unit, based on the first transaction record information and the second transaction record information.

An information processing device according to an aspect of the present disclosure includes: a first obtainer that obtains first transaction record information indicating a record of a transaction involving a transaction item that is performed using a first non-fungible token (NFT), the first NFT indicating that the transaction involving the transaction item is to be performed in a first unit; a second obtainer that obtains second transaction record information indicating a record of a transaction involving the transaction item that is performed using a second NFT, the second NFT indicating that the transaction involving the transaction item is to be performed in a second unit different from the first unit; and an executor that executes processing to determine a market rate between the first unit and the second unit, based on the first transaction record information and the second transaction record information.

A program according to an aspect of the present disclosure is a program for causing a computer to execute the information processing method described above.

### [Advantageous Effects of Invention]

According to an aspect of the present disclosure, it is possible to implement an information processing method and the like capable of assisting in performing appropriate transactions even when mutually different units are used.

### [Brief Description of Drawings]

[FIG. 1]

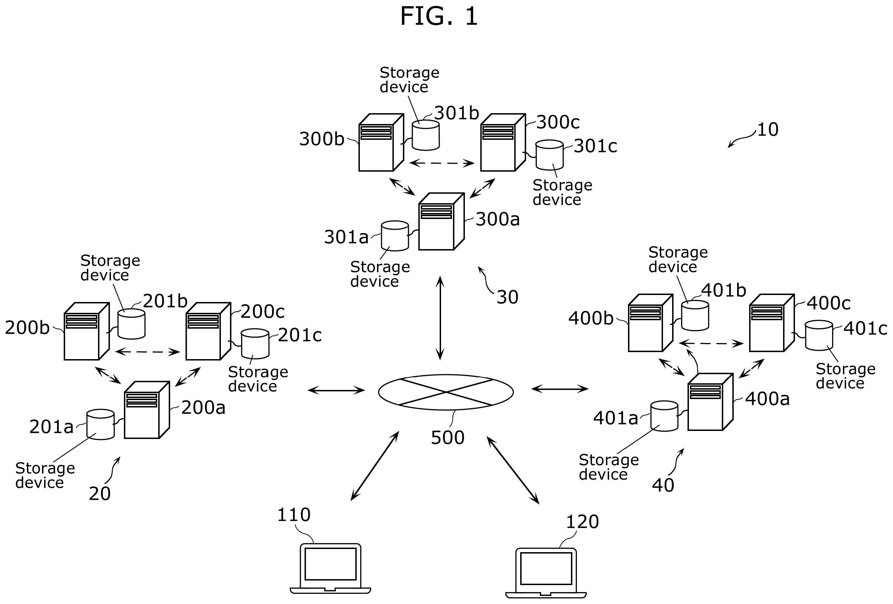

   FIG. 1 is a diagram illustrating a configuration of an information processing system according to an embodiment.
[FIG. 2A]

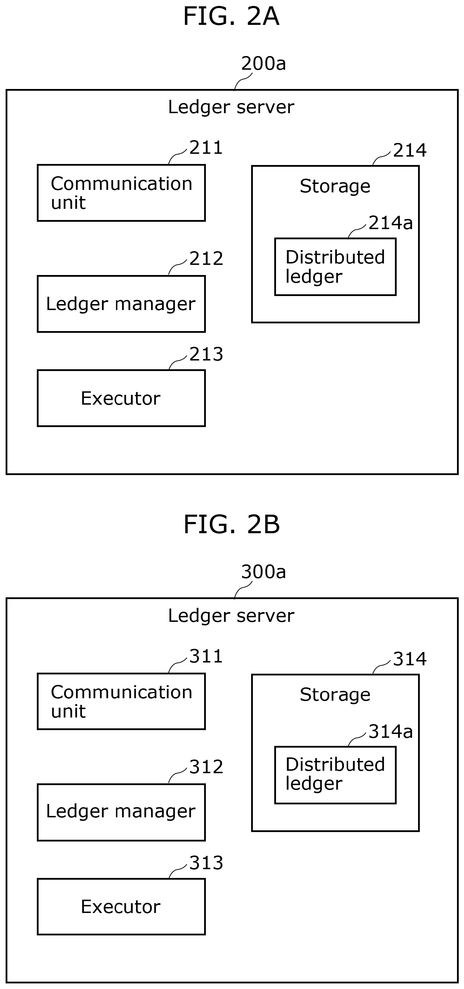

   FIG. 2A is a block diagram illustrating a functional configuration of a ledger server included in a first distributed ledger system according to an embodiment.
[FIG. 2B]
   FIG. 2B is a block diagram illustrating a functional configuration of a ledger server included in a second distributed ledger system according to an embodiment.
[FIG. 2C]

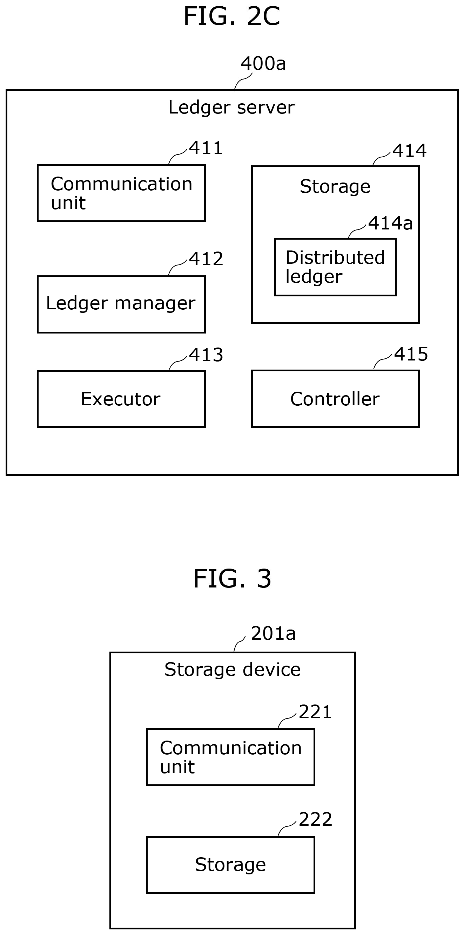

   FIG. 2C is a block diagram illustrating a functional configuration of a ledger server included in a third distributed ledger system according to an embodiment.
[FIG. 3]
   FIG. 3 is a block diagram illustrating a functional configuration of a storage device included in a first distributed ledger system according to an embodiment.
[FIG. 4]

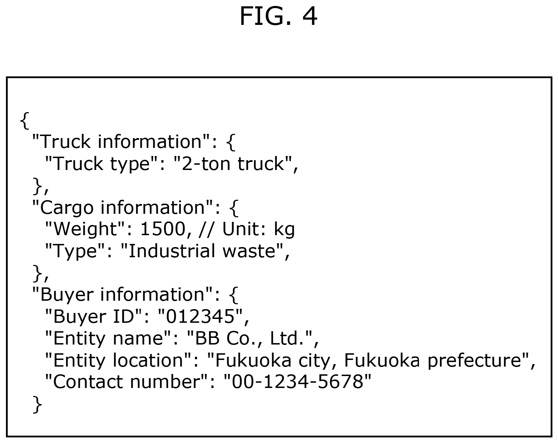

   FIG. 4 is a diagram illustrating an example of metadata of a market rate NFT according to an embodiment.
[FIG. 5]

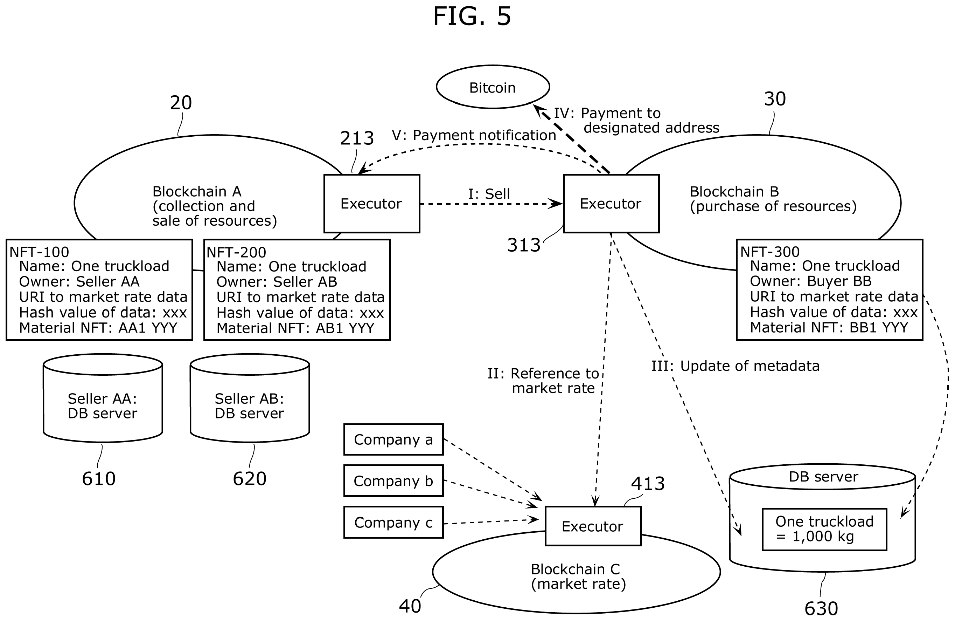

   FIG. 5 is a diagram schematically illustrating a flow of a sale-and-purchase transaction in an information processing system according to an embodiment.
[FIG. 6]

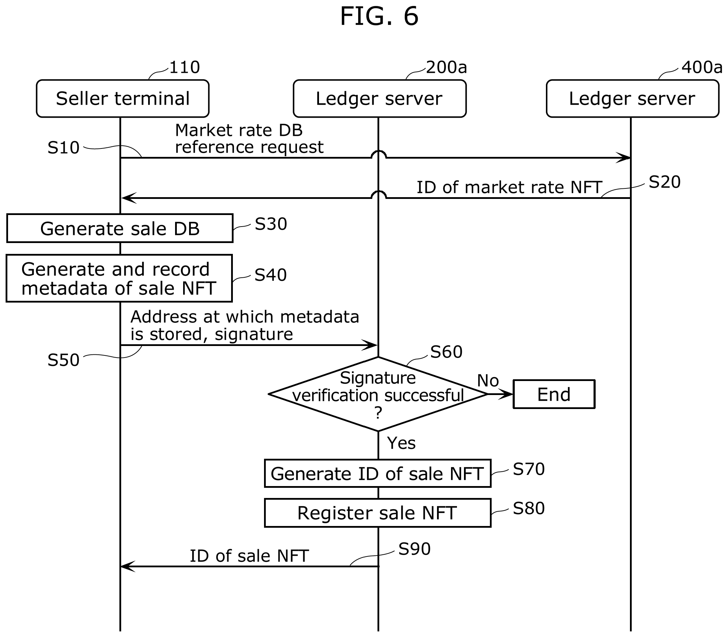

   FIG. 6 is a sequence diagram illustrating an operation for registering an NFT for sale, performed in an information processing system according to an embodiment.
[FIG. 7]

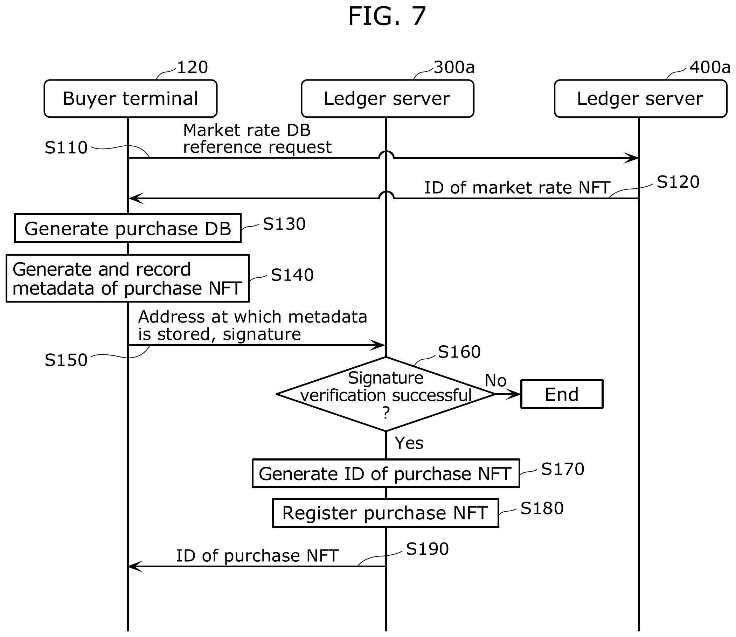

   FIG. 7 is a sequence diagram illustrating an operation for registering an NFT for purchase, performed in an information processing system according to an embodiment.
[FIG. 8]

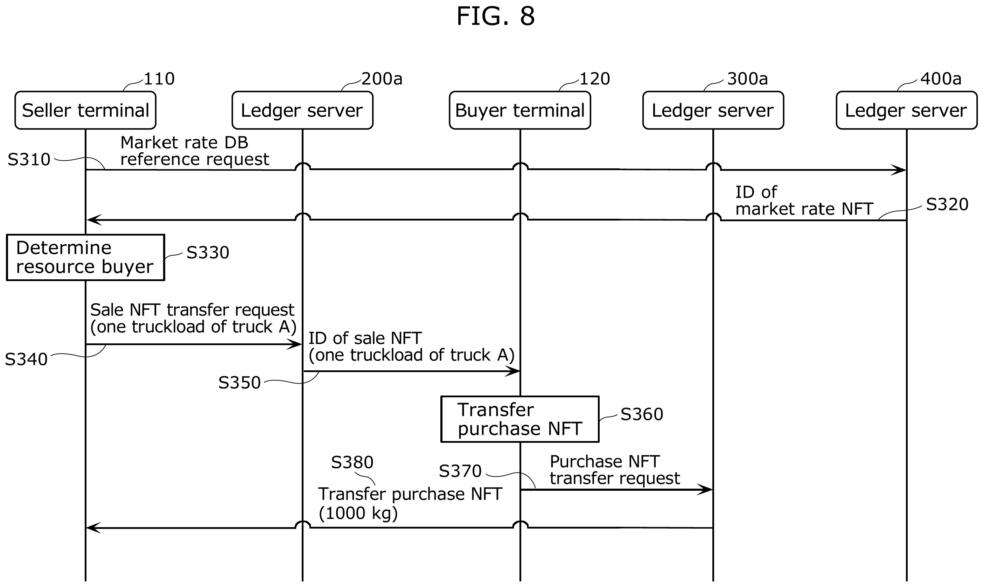

   FIG. 8 is a sequence diagram illustrating an operation for selling and purchasing a resource, performed in an information processing system according to an embodiment.
[FIG. 9]

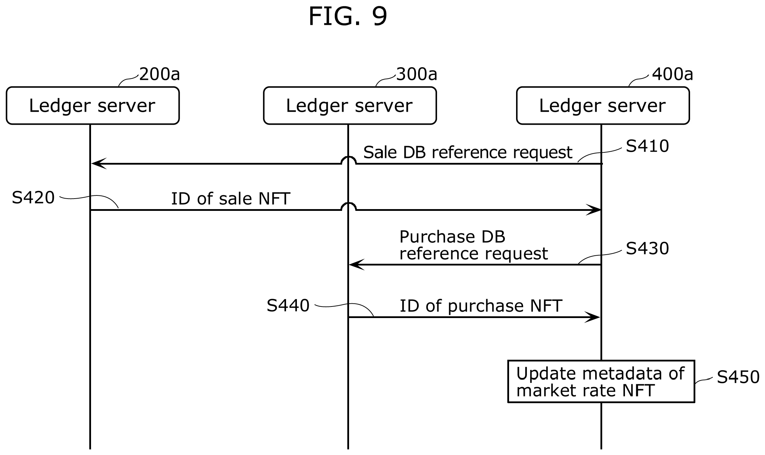

   FIG. 9 is a sequence diagram illustrating an operation for adjusting a market rate, performed in an information processing system according to an embodiment.
[FIG. 10]

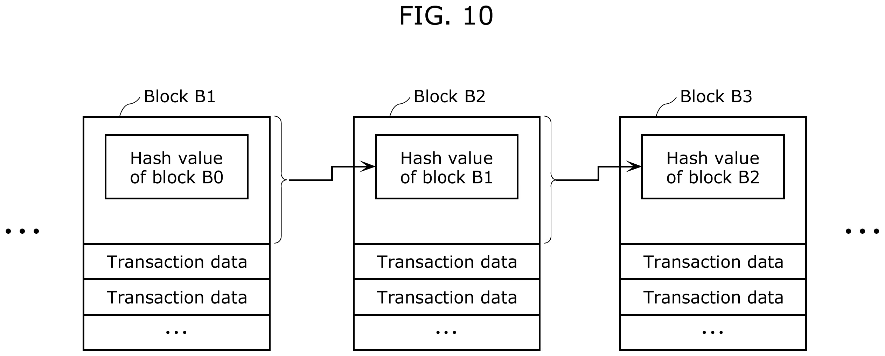

   FIG. 10 is an explanatory diagram illustrating a data structure of a blockchain.
[FIG. 11]

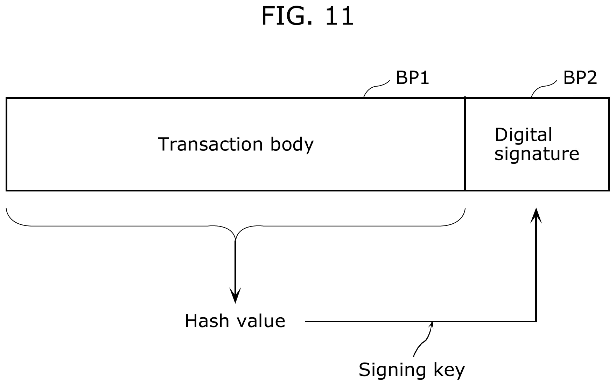

   FIG. 11 is an explanatory diagram illustrating a data structure of transaction data.
[FIG. 12]

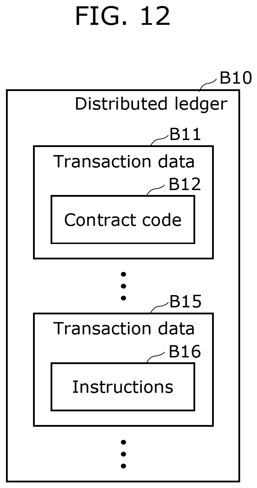

   FIG. 12 is an explanatory diagram illustrating transaction data relating to execution of a smart contract.
[FIG. 13]

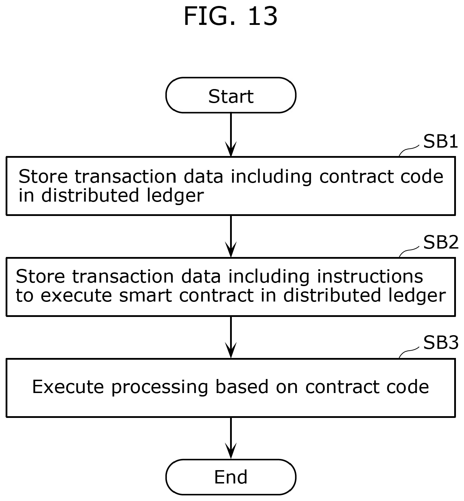

   FIG. 13 is an explanatory diagram illustrating processing relating to execution of a smart contract.
[FIG. 14]

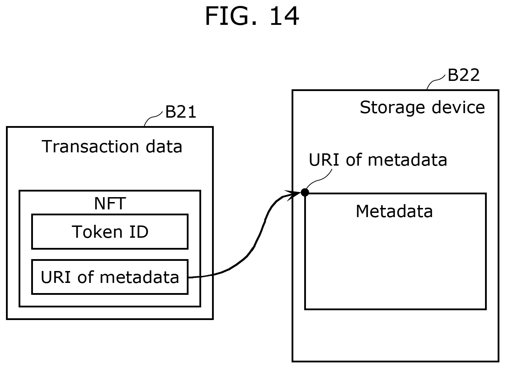

   FIG. 14 is an explanatory diagram illustrating structures of an NFT and metadata.
[FIG. 15]

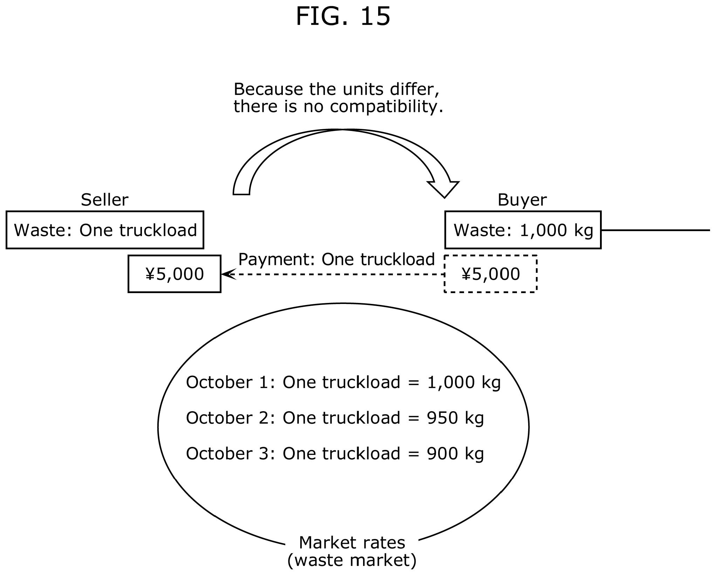

   FIG. 15 is a diagram for describing an issue that the present disclosure is to address.

### [Description of Embodiments]

### (Circumstances Leading to the Present Disclosure)

Prior to the description of the present disclosure, the circumstances leading to the present disclosure will be described with reference to FIG. 15. FIG. 15 is a diagram for describing an issue that the present disclosure is to address. FIG. 15 illustrates an example in which a resource (waste), which is an example of a transaction item, is sold and purchased. An example of a transaction is a sale and purchase. Note that waste may include items that are disassembled and recycled, items that are disposed of, and items that are reused.

A seller is an entity that collects a resource and sells the resource to a buyer. A buyer is an entity that purchases a resource from a seller and, for example, disassembles the purchased resource. The seller receives a payment of 5000 yen upon sale of one truckload of resource, and the buyer pays 5000 yen upon purchase of 1000 kg of resource. The seller sells the resource in a first unit via a first distributed ledger system that uses a first blockchain, whereas the buyer purchases the resource in a second unit via a second distributed ledger system that uses a second blockchain.

As illustrated in FIG. 15, for sellers, the unit for selling a resource (waste) is one truckload, whereas for buyers, the unit for purchasing a resource is weight (kg), for example. One truckload is an example of the first unit, and weight is an example of the second unit. For example, the first unit and the second unit are units of transaction for a resource traded in the real world. Furthermore, for example, the first unit may be the unit used when selling an item to be traded (hereinafter referred to as a "traded item"), whereas the second unit may be the unit used when purchasing a traded item. The traded item is an example of the transaction item.

Since truckload and weight are different units and incompatible with each other, it is difficult to trade resources without unit conversion. Furthermore, the market rate (waste market) may fluctuate on a daily basis. That is, the value of resources may fluctuate on a daily basis.

As described above, the unit of transaction may differ between the first blockchain and the second blockchain. For example, it is possible to assign a fixed weight per truckload, but this may result in a deviation from the market rate; therefore, it is necessary to appropriately determine the market rate between the different units used in a sale and purchase of a traded item such as a resource.

In view of the above, the inventors of the present application have diligently studied an information processing method and the like capable of assisting in performing appropriate sale-and-purchase transactions even when mutually different units are used, and have devised the information processing method and the like described below.

Note that the first unit is not limited to truckload and the second unit is not limited to weight. It suffices so long as the first unit and the second unit are different units of transaction. For example, one of the first unit or the second unit may be a quantity, or may be a measure of size such as length.

Note that after disassembling the traded item, the buyer, for example, sells each material according to the market rate of each material. When the traded item (object) is bedding, examples of its materials are cotton and fabric. When the traded item (object) is a bicycle, examples of its materials are rubber, plastic, and metals (for example, iron, steel, and aluminum). When the traded item (object) is a chair, examples of its materials are wood, fabric, sponge, and metals (for example, iron and copper).

An information processing method according to a first aspect of the present disclosure includes: obtaining first transaction record information indicating a record of a transaction involving a transaction item that is performed using a first non-fungible token (NFT), the first NFT indicating that the transaction involving the transaction item is to be performed in a first unit; obtaining second transaction record information indicating a record of a transaction involving the transaction item that is performed using a second NFT, the second NFT indicating that the transaction involving the transaction item is to be performed in a second unit different from the first unit; and determining a market rate between the first unit and the second unit, based on the first transaction record information and the second transaction record information.

Accordingly, the market rate between the first unit and the second unit can be determined based on the transaction record information, that is, the market rate can be determined based on transaction records, thereby making it possible to appropriately determine the market rate between the first unit and the second unit. Therefore, according to the information processing method, by using the market rate determined in the above manner in a sale and purchase of the transaction item, it is possible to assist in performing an appropriate transaction.

Furthermore, for example, an information processing method according to a second aspect is the information processing method according to the first aspect in which the first unit may be a unit used when selling the transaction item, and the second unit may be a unit used when purchasing the transaction item.

Accordingly, it is possible to appropriately determine the market rate between the first unit used by the seller and the second unit used by the buyer.

Furthermore, for example, an information processing method according to a third aspect is the information processing method according to the second aspect, and may further include: referencing at least one of a first blockchain or a second blockchain, the first blockchain storing information relating to the transaction involving the transaction item that is performed in the first unit, the second blockchain storing information relating to the transaction involving the transaction item that is performed in the second unit; and updating the market rate, based on a result of the referencing.

Accordingly, the market rate can be updated; therefore, an appropriate market rate can be maintained.

Furthermore, for example, an information processing method according to a fourth aspect is the information processing method according to the second aspect or the third aspect in which the first NFT for the transaction involving the transaction item may include first metadata that includes information relating to a first market rate, the second NFT for the transaction involving the transaction item may include second metadata that includes information relating to a second market rate, and at least one of the first metadata or the second metadata may be stored in a database.

Accordingly, at least one of the first metadata or the second metadata is stored in the database; therefore, the at least one metadata can be updated every time a transaction is performed.

Furthermore, for example, an information processing method according to a fifth aspect is the information processing method according to the fourth aspect in which the first metadata may include the first market rate and information other than the first market rate, the second metadata may include the second market rate and information other than the second market rate, in the obtaining of the first transaction record information, only the first market rate included in the first metadata may be permitted to be obtained, and in the obtaining of the second transaction record information, only the second market rate included in the second metadata may be permitted to be obtained.

This makes it possible to suppress referencing of information irrelevant to the market rate included in the metadata.

Furthermore, for example, an information processing method according to a sixth aspect is the information processing method according to any one of the first through fifth aspects in which the determining of the market rate may be performed after generating predetermined transaction data and storing the predetermined transaction data in a third blockchain that stores information relating to the market rate, the generating and the storing being performed by a node terminal of a distributed ledger system that uses the third blockchain.

This makes it possible to automatically update the market rate.

Furthermore, for example, an information processing method according to a seventh aspect is the information processing method according to any one of the first through sixth aspects in which the market rate may be referenced when a transaction request that requests a transaction involving the transaction item is transmitted.

Accordingly, a transaction involving the transaction item can be performed using the market rate at the time of the actual transaction; therefore, it is possible to effectively assist in performing an appropriate transaction.

Furthermore, an information processing device according to an eighth aspect of the present disclosure includes: a first obtainer that obtains first transaction record information indicating a record of a transaction involving a transaction item that is performed using a first non-fungible token (NFT), the first NFT indicating that the transaction involving the transaction item is to be performed in a first unit; a second obtainer that obtains second transaction record information indicating a record of a transaction involving the transaction item that is performed using a second NFT, the second NFT indicating that the transaction involving the transaction item is to be performed in a second unit different from the first unit; and an executor that executes processing to determine a market rate between the first unit and the second unit, based on the first transaction record information and the second transaction record information.

Accordingly, the same advantageous effects as those of the above-described information processing method are provided.

Furthermore, a program according to a ninth aspect of the present disclosure is a program for causing a computer to execute the information processing method according to any one of the first through seventh aspects.

Accordingly, the same advantageous effects as those of the above-described information processing method are provided.

Note that these general or specific aspects may be implemented using a system, a method, an integrated circuit, a computer program, or a non-transitory computer-readable recording medium such as a compact disc read-only memory (CD-ROM), or any combination of systems, methods, integrated circuits, computer programs, or recording media. The program may be recorded on a recording medium in advance, or may be supplied to a recording medium via a wide area communication network such as the Internet.

Hereinafter, exemplary embodiments will be specifically described with reference to the accompanying Drawings.

Note that each of the exemplary embodiments described below shows a general or specific example. The numerical values, constituent elements, the arrangement and connection of the constituent elements, steps, the processing order of the steps etc. shown in the following exemplary embodiments are mere examples, and are therefore not intended to limit the present disclosure. Further, among the constituent elements in the following exemplary embodiments, those not recited in any of the independent claims will be described as optional constituent elements.

Furthermore, the Drawings are represented schematically and are not necessarily precise illustrations. In addition, constituent elements that are substantially the same are given the same reference signs in the Drawings, and redundant descriptions thereof will be omitted or simplified.

In the present Specification, numerical values and numerical value ranges include, in addition to their exact meanings, substantially equivalent ranges including deviations of approximately a few percent (or approximately 10%), for example.

In the present Specification, ordinal numbers such as "first" and "second" are used not to imply a specific number or order of constituent elements unless specifically stated otherwise, but rather to avoid confusion among similar constituent elements and to distinguish them.

### [Embodiment]

Hereinafter, an information processing system according to the present embodiment will be described with reference to FIG. 1 through FIG. 9.

### [1. Configuration of Information Processing System]

First, a configuration of the information processing system according to the present embodiment will be described with reference to FIG. 1 through FIG. 4. FIG. 1 is a diagram illustrating a configuration of information processing system 10 according to the present embodiment.

As illustrated in FIG. 1, information processing system 10 includes, for example, seller terminal 110, buyer terminal 120, ledger servers 200a, 200b, 200c, ledger servers 300a, 300b, 300c, and ledger servers 400a, 400b, 400c. These elements are communicatively connected to each other by communication network 500.

Hereinafter, ledger servers 200a, 200b, 200c are also referred to as "ledger server 200a and the like", ledger servers 300a, 300b, 300c are also referred to as "ledger server 300a and the like", and ledger servers 400a, 400b, 400c are also referred to as "ledger server 400a and the like". Further, storage devices 201a, 201b, 201c are also referred to as "storage device 201a and the like", storage devices 301a, 301b, 301c are also referred to as "storage device 301a and the like", and storage devices 401a, 401b, 401c are also referred to as "storage device 401a and the like".

Ledger server 200a and the like are connected to storage device 201a and the like. Ledger server 200a and the like may be connected to storage device 201a and the like via communication network 500, or may internally include storage device 201a and the like. Storage device 201a and the like each include distributed ledger 214a (see FIG. 2A) on which transaction data and blocks of a blockchain are electrically recorded. Ledger servers 200a, 200b, 200c make up first distributed ledger system 20. Ledger server 200a and the like are node terminals of first distributed ledger system 20.

Ledger server 300a and the like are connected to storage device 301a and the like. Ledger server 300a and the like may be connected to storage device 301a and the like via communication network 500, or may internally include storage device 301a and the like. Storage device 301a and the like each include distributed ledger 314a (see FIG. 2B) on which transaction data and blocks of a blockchain are electrically recorded. Ledger servers 300a, 300b, 300c make up second distributed ledger system 30. Ledger server 300a and the like are node terminals of second distributed ledger system 30.

Ledger server 400a and the like are connected to storage device 401a and the like. Ledger server 400a and the like may be connected to storage device 401a and the like via communication network 500, or may internally include storage device 401a and the like. Storage device 401a and the like each include distributed ledger 414a (see FIG. 2C) on which transaction data and blocks of a blockchain are electrically recorded. Ledger servers 400a, 400b, 400c make up third distributed ledger system 40. Ledger server 400a and the like are node terminals of third distributed ledger system 40 and are examples of the information processing device.

In the present embodiment, first distributed ledger system 20 stores information (transaction data, for example) relating to sale of a traded item by the seller, whereas second distributed ledger system 30 stores information (transaction data, for example) relating to purchase of a traded item by the buyer. Transaction data includes transaction data indicating transfer of tokens between users. Tokens include at least a non-fungible token (NFT). Further, tokens may include value information in general (a monetary value or information equivalent to a monetary value). An "NFT" is a token having non-fungibility, and is typically a token compliant with ERC-721, which is an Ethereum blockchain standard; however, the NFT may be a token compliant with a different standard or a non-standard token, or may be a token on a blockchain other than the Ethereum blockchain. Although ERC-721 is a token standard for uniquely distinguishable tokens, the NFTs in the present Specification need not be uniquely distinguishable tokens. For example, a single NFT may correspond to ten items. Further, a plurality of NFTs may be assigned to the same item. For example, different NFTs may be assigned to the same item depending on the day; that is, one NFT today and another NFT tomorrow. Also, different NFTs may be assigned to the same item depending on the organization; that is, one NFT for organization A and another NFT for organization B, for example.

Third distributed ledger system 40 manages the market rate for the unit of sale of a traded item by the seller (a first unit) and the unit of purchase of the traded item by the buyer (a second unit). Managing the market rate includes, for example, determining how much of the second unit corresponds to the first unit (the market rate between the first unit and the second unit). For example, when one truckload is the first unit and weight of resource is the second unit, managing the market rate includes determining the weight of one truckload of resource. Each of first distributed ledger system 20, second distributed ledger system 30, and third distributed ledger system 40 performs distributed ledger management using a blockchain. Note that the number of ledger servers included in each distributed ledger system is not limited to three, provided that at least one ledger server is included.

Seller terminal 110 is an information processing device possessed by an entity that sells traded items. Seller terminal 110 is an information processing device having the access right to access the data stored on distributed ledgers 214a of first distributed ledger system 20. Seller terminal 110 is permitted to transmit transaction data to the blockchain.

Seller terminal 110 includes, for example: a communication unit through which communication is performed with ledger server 200a via communication network 500; a receiver that receives an operation (input) from a first user who belongs to the seller; and a transaction data generator that generates transaction data to be stored on the blockchain, based on data or the like obtained from the receiver.

Buyer terminal 120 is an information processing device possessed by an entity that purchases traded items. Buyer terminal 120 is an information processing device having the access right to access the data stored on distributed ledgers 314a of second distributed ledger system 30. Buyer terminal 120 is permitted to transmit transaction data to the blockchain.

Buyer terminal 120 includes, for example: a communication unit through which communication is performed with ledger server 300a via communication network 500; a receiver that receives an operation (input) from a second user who belongs to the buyer; and a transaction data generator that generates transaction data to be stored on the blockchain, based on data or the like obtained from the receiver.

Each of seller terminal 110 and buyer terminal 120 includes a processor and a memory, for example. The memory is read-only memory (ROM), random-access memory (RAM), or the like, and is capable of storing a program executed by the processor. Each function of seller terminal 110 and buyer terminal 120 is achieved by, for example, the processor that executes the program stored in the memory. The communication unit may include, for example, a communication circuit (or a communication module), and the receiver may include a touch panel, a button, a sound collection device, and so on. Each of seller terminal 110 and buyer terminal 120 may be implemented using a stationary personal computer (PC), a mobile terminal such as a smartphone or a tablet, a server device, or the like.

First distributed ledger system 20 is an information processing system that stores information using distributed ledgers 214a. Distributed ledgers 214a included in first distributed ledger system 20 each store, for example, a generation record of a non-fungible token (NFT) corresponding one-to-one to a traded item in the real world and a transfer record of the NFT. The NFT includes an NFT for sale (a sale NFT) that traces, on distributed ledgers 214a, collection or sale of a traded item in the real world. Note that the sale NFT includes a token ID (that is, identification information with which the NFT can be uniquely identified) and information on the unit used for selling and purchasing the traded item.

The transaction data includes transaction data including a contract code of a smart contract, transaction data including an instruction to execute a smart contract, or transaction data including other information. First distributed ledger system 20 can execute processing using a smart contract stored in distributed ledgers 214a. By executing a smart contract, first distributed ledger system 20 can generate a sale NFT and implement a transfer of the sale NFT.

First distributed ledger system 20 includes ledger servers 200a, 200b, and 200c as a server group holding distributed ledgers 214a. When at least one of ledger server 200a and the like receives transaction data, the transaction data is shared by all of ledger server 200a and the like and stored on distributed ledgers 214a.

Ledger server 200a is a computer (server) that holds and manages distributed ledger 214a. Ledger server 200a holds distributed ledger 214a, and updates distributed ledger 214a in synchronization with the other ledger servers (specifically, ledger servers 200b and 200c).

Ledger servers 200b and 200c are similar to ledger server 200a and operate independently of ledger server 200a.

FIG. 2A is a block diagram illustrating a functional configuration of ledger server 200a included in first distributed ledger system 20 according to the present embodiment. Since the configurations of ledger servers 200b and 200c are similar to that of ledger server 200a, ledger server 200a will be described as an example. Note that FIG. 2A illustrates an exemplary functional configuration of ledger server 200a, and the functional configuration of ledger server 200a is not limited to FIG. 2A.

As illustrated in FIG. 2A, ledger server 200a includes communication unit 211, ledger manager 212, executor 213, and storage 214. At least one of the functional units included in ledger server 200a is implemented by a processor (for example, a central processing unit (CPU)) included in ledger server 200a executing a program using a memory.

Communication unit 211 is a communication interface communicatively connected to communication network 500. Communication unit 211 may be a communication interface conforming to a wired communication standard (for example, Ethernet (registered trademark), etc.) or may be a communication interface conforming to a wireless communication standard (for example, Wi-Fi (registered trademark) etc. or a mobile communications system (3G, 4G, or 5G, etc.)). Communication unit 211 is used when the functional units included in ledger server 200a communicate with other devices. For example, communication unit 211 is used when the functional units included in ledger server 200a communicate with any of seller terminal 110, buyer terminal 120, ledger servers 200b and 200c, ledger server 300a and the like, and ledger server 400a and the like.

Ledger manager 212 performs processing relating to distributed ledger 214a and transaction data. Specifically, upon receiving transaction data from, for example, seller terminal 110, ledger manager 212 performs control to verify a digital signature included in the received transaction data and store the successfully verified transaction data on distributed ledger 214a held in storage 214.

Executor 213 executes information processing. For example, executor 213 can execute information processing by executing a smart contract using distributed ledger 214a. Note that, in the case of not using a smart contract, executor 213 executes information processing according to a normal program code.

Storage 214 is a storage device that stores information. Storage 214 stores distributed ledger 214a. Storage 214 is implemented using a nonvolatile storage device (a solid-state drive (SSD) or a hard disk drive (HDD)), for example.

Distributed ledger 214a stores data structured as chained blocks, each including one or more transaction data items. The one or more transaction data items stored on distributed ledger 214a include transaction data including a contract code of a smart contract, transaction data including an instruction to execute a smart contract, or transaction data including other information.

In the present embodiment, distributed ledgers 214a, 314a, and 414a are a blockchain.

Referring again to FIG. 1, second distributed ledger system 30 is an information processing system that stores information using distributed ledgers 314a. Distributed ledgers 314a included in second distributed ledger system 30 each store, for example, a generation record of an NFT corresponding one-to-one to a traded item in the real world and a transfer record of the NFT. The NFT includes an NFT for purchase (a purchase NFT) that traces, on distributed ledgers 314a, purchase of a traded item in the real world. Note that the purchase NFT includes a token ID (that is, identification information with which the NFT can be uniquely identified).

Second distributed ledger system 30 can execute processing using a smart contract stored on distributed ledgers 314a. By executing a smart contract, second distributed ledger system 30 can generate a purchase NFT and implement a transfer of the purchase NFT.

Second distributed ledger system 30 includes ledger servers 300a, 300b, and 300c as a server group holding distributed ledgers 314a. When at least one of ledger server 300a and the like receives transaction data, the transaction data is shared by all of ledger server 300a and the like and stored on distributed ledgers 314a.

Ledger server 300a is a computer (server) that holds and manages distributed ledger 314a. Ledger server 300a holds distributed ledger 314a (see FIG. 2B), and updates distributed ledger 314a in synchronization with the other ledger servers (specifically, ledger servers 300b and 300c).

Ledger servers 300b and 300c are similar to ledger server 300a and operate independently of ledger server 300a.

FIG. 2B is a block diagram illustrating a functional configuration of ledger server 300a included in second distributed ledger system 30 according to the present embodiment. Since the configurations of ledger servers 300b and 300c are similar to that of ledger server 300a, ledger server 300a will be described as an example. Note that FIG. 2B illustrates an exemplary functional configuration of ledger server 300a, and the functional configuration of ledger server 300a is not limited to FIG. 2B.

As illustrated in FIG. 2B, ledger server 300a includes communication unit 311, ledger manager 312, executor 313, and storage 314. At least one of the functional units included in ledger server 300a is implemented by a processor (for example, a CPU) included in ledger server 300a executing a program using a memory.

Communication unit 311 is a communication interface communicatively connected to communication network 500. Communication unit 311 may be a communication interface conforming to a wired communication standard or may be a communication interface conforming to a wireless communication standard. Communication unit 311 is used when the functional units included in ledger server 300a communicate with other devices.

Ledger manager 312 performs processing relating to distributed ledger 314a and transaction data. Specifically, upon receiving transaction data from, for example, buyer terminal 120, ledger manager 312 performs control to verify a digital signature included in the received transaction data and store the successfully verified transaction data on distributed ledger 314a held in storage 314.

Executor 313 executes information processing. For example, executor 313 can execute information processing by executing a smart contract using distributed ledger 314a. Note that, in the case of not using a smart contract, executor 313 executes information processing according to a normal program code.

Storage 314 is a storage device that stores information. Storage 314 stores distributed ledger 314a. Storage 314 is implemented using a nonvolatile storage device, for example.

Distributed ledger 314a stores data structured as chained blocks, each including one or more transaction data items. The one or more transaction data items stored on distributed ledger 314a include transaction data including a contract code of a smart contract, transaction data including an instruction to execute a smart contract, or transaction data including other information.

Referring again to FIG. 1, third distributed ledger system 40 is an information processing system that stores information using distributed ledgers 414a. Distributed ledgers 414a included in third distributed ledger system 40 store, for example, information on a market rate between the first unit and the second unit.

Third distributed ledger system 40 can execute processing using a smart contract stored on distributed ledgers 414a. By executing a smart contract, third distributed ledger system 40 can generate an NFT and implement a transfer of the NFT.

Third distributed ledger system 40 includes ledger servers 400a, 400b, and 400c as a server group holding distributed ledgers 414a. When at least one of ledger server 400a and the like receives transaction data, the transaction data is shared by all of ledger server 400a and the like and stored on distributed ledgers 414a.

Ledger server 400a is a computer (server) that holds and manages distributed ledger 414a. Ledger server 400a holds distributed ledger 414a, and updates distributed ledger 414a in synchronization with the other ledger servers (specifically, ledger servers 400b and 400c). Ledger server 400a is, for example, a management device used for a market-rate-adjustment blockchain to adjust and guarantee compatibility of units across a plurality of blockchains that use different units for selling and purchasing traded items. NFTs include information on units in which traded items are sold and purchased.

Ledger servers 400b and 400c are similar to ledger server 400a and operate independently of ledger server 400a.

FIG. 2C is a block diagram illustrating a functional configuration of ledger server 400a included in third distributed ledger system 40 according to the present embodiment. Since the configurations of ledger servers 400b and 400c are similar to that of ledger server 400a, ledger server 400a will be described as an example. Note that FIG. 2C illustrates an exemplary functional configuration of ledger server 400a, and the functional configuration of ledger server 400a is not limited to FIG. 2C.

As illustrated in FIG. 2C, ledger server 400a includes communication unit 411, ledger manager 412, executor 413, storage 414, and controller 415. At least one of the functional units included in ledger server 400a is implemented by a processor (for example, a CPU) included in ledger server 400a executing a program using a memory.

Communication unit 411 is a communication interface communicatively connected to communication network 500. Communication unit 411 may be a communication interface conforming to a wired communication standard or may be a communication interface conforming to a wireless communication standard. Communication unit 411 is used when the functional units included in ledger server 400a communicate with other devices.

Ledger manager 412 performs processing relating to distributed ledger 414a and transaction data. Specifically, upon receiving transaction data from, for example, ledger server 200a and the like or ledger server 300a and the like, ledger manager 412 performs control to verify a digital signature included in the received transaction data and store the successfully verified transaction data on distributed ledger 414a held in storage 414.

Executor 413 executes information processing. For example, executor 413 can execute information processing by executing a smart contract using distributed ledger 414a. Note that, in the case of not using a smart contract, executor 413 executes information processing according to a normal program code.

Storage 414 is a storage device that stores information. Storage 414 stores distributed ledger 414a. Storage 414 is implemented using a nonvolatile storage device, for example.

Distributed ledger 414a stores data structured as chained blocks, each including one or more transaction data items. The one or more transaction data items stored on distributed ledger 414a include transaction data including a contract code of a smart contract, transaction data including an instruction to execute a smart contract, or transaction data including other information.

Controller 415 performs control of generation and storage of various data, for example. For example, controller 415 may generate a sale database (DB) reference request or transaction data that includes a sale DB reference request. Further, controller 415 may generate a purchase DB reference request or transaction data that includes a purchase DB reference request.

Referring again to FIG. 1, storage device 201a and the like are connected to ledger server 200a and the like and each include a distributed ledger on which transaction data and blocks of a blockchain are electrically recorded. The same applies to storage device 301a and the like and storage device 401a and the like.

FIG. 3 is a block diagram illustrating a functional configuration of storage device 201a included in first distributed ledger system 20 according to the present embodiment. Since the configurations of storage devices 201b and 201c, storage device 301a and the like, and storage device 401a and the like are similar to that of storage device 201a, storage device 201a will be described as an example. Note that FIG. 3 illustrates an exemplary functional configuration of storage device 201a, and the functional configuration of storage device 201a is not limited to FIG. 3.

As illustrated in FIG. 3, storage device 201a includes communication unit 221 and storage 222.

Communication unit 221 is a communication interface connected to ledger server 200a and may be a communication interface communicatively connected to communication network 500, for example. Communication unit 221 may be a communication interface conforming to a wired communication standard or may be a communication interface conforming to a wireless communication standard.

Storage 222 is a storage device that stores information. Storage 222 may store metadata of a sale NFT, for example. Storage 222 is implemented using a nonvolatile storage device (SSD or HDD), for example. Metadata of a sale NFT may include, for example: information on the first unit; information on a market rate between the first unit and the second unit; information relating to a buyer including buyer assessment information or the like; information relating to a purchasing price. Further, the metadata may include at least one of a blockchain address, a blockchain type, a token standard, a contract address, or a token ID.

Note that the storage included in storage device 301a stores metadata of a purchase NFT. Metadata of a purchase NFT may include information on the second unit and information on a market rate between the first unit and the second unit. The storage included in storage device 401a stores metadata of a market rate NFT.

As described above, information processing system 10 includes third distributed ledger system 40 that manages a market rate between the first unit and the second unit, and information processing for sale and purchase of a traded item is executed between first distributed ledger system 20 and second distributed ledger system 30, using the market rate managed by third distributed ledger system 40.

Here, an example of metadata of a market rate NFT will be described with reference to FIG. 4. FIG. 4 is a diagram illustrating an example of metadata of a market rate NFT according to the present embodiment.

As illustrated in FIG. 4, metadata of a market rate NFT includes: "Truck type" as "Truck information"; "Weight" and "Type" as "Cargo information"; and "Buyer ID", "Entity name", "Entity location", and "Contact number" as "Buyer information". "Truck type" indicates a type of truck based on its load capacity and is a 2-ton truck in the example in FIG. 4. "Weight" indicates the weight of cargo and is 1500 kg in the example in FIG. 4. "Type" indicates a type of cargo and is industrial waste in the example in FIG. 4. "Buyer ID" indicates identification information of the buyer.

### [2. Operation of Information Processing System]

Now, operation of information processing system 10 configured as described above will be described with reference to FIG. 5 through FIG. 9. FIG. 5 is a diagram schematically illustrating a flow of a sale-and-purchase transaction in information processing system 10 according to the present embodiment. In the following, an example will be described in which a traded item is a resource. The resource may be waste. In FIG. 5, first distributed ledger system 20 is labeled as blockchain A for collection and sale of a resource, second distributed ledger system 30 is labeled as blockchain B for purchase of a resource, and third distributed ledger system 40 is labeled as blockchain C for market rates (a market rate blockchain). Third distributed ledger system 40 has, for example, a function for adjusting market rates to prevent a market crash. Note that although FIG. 5 illustrates only one first distributed ledger system 20 and only one second distributed ledger system 30, first distributed ledger system 20 and second distributed ledger system 30 may be provided in a plurality of instances.

NFT-100 is a unique token (in other words, a non-fungible token) stored on distributed ledger 214a by seller AA. Metadata of NFT-100 is stored in, for example, DB server 610 of seller AA accessible to first distributed ledger system 20 via communication network 500. The metadata includes a token ID of NFT-100.

NFT-200 is a unique token (in other words, a non-fungible token) stored on distributed ledger 214a by seller AB. Metadata of NFT-200 is stored in, for example, DB server 620 of seller AB accessible to first distributed ledger system 20 via communication network 500. The metadata includes a token ID of NFT-200.

NFT-300 is a unique token (in other words, a non-fungible token) stored on distributed ledger 314a by buyer BB.

Each NFT includes: the unit of sale ("Name" illustrated in FIG. 5); the owner of the NFT ("Owner" illustrated in FIG. 5); the location of market rate data (for example, market rate metadata) ("URI to" illustrated in FIG. 5 (URI stands for uniform resource identifier)); the hash value of data; and a material NFT indicating an NFT of a material into which a resource is disassembled. The unit of sale is one truckload, and the weight of one truckload at the time of sale can be identified based on the location of the market rate data. The location of the market rate data includes, for example, the address of the market rate metadata.

DB server 630 is a storage device accessible to third distributed ledger system 40 via communication network 500. DB server 630 stores information relating to a market rate (market rate metadata). In the example in FIG. 5, DB server 630 stores market rate metadata including information indicating that a market rate for the weight of one truckload of resource is 1000 kg. Since the market rate in the real world changes from moment to moment, the market rate metadata may be updated accordingly. The update may be performed by overwriting the market rate metadata, or may be performed by cumulatively adding the market rate metadata. Distributed ledger 414a of third distributed ledger system 40 stores a market rate NFT that is an NFT relating to a market rate. The market rate NFT includes a token ID and the location of market rate metadata, for example.

As illustrated in FIG. 5, first, executor 213 executes processing to "I: Sell" on executor 313. For example, after a buyer subject to a transaction is determined from among a plurality of buyers, executor 213 transmits, to executor 313, a request for a transfer of the ownership of a sale NFT. Note that, before transmitting, to executor 313, the request for a transfer of the ownership of the sale NFT, executor 213 may transmit a request for reference to the market rate to executor 413 to obtain information on the market rate.

Next, upon receiving the request, executor 313 transmits, to executor 413, a request for "II: Reference to market rate". That is, executor 313 checks the latest market rate when performing a sale-and-purchase transaction. Accordingly, in information processing system 10, the market rate is referenced when a request (transaction request) for a transaction involving a traded item is transmitted.

Next, after a sale-and-purchase transaction involving a resource is performed between executors 213 and 313, "III: Update of metadata" is performed on the market rate metadata stored in DB server 630. That is, the weight of one truckload of resource (the market rate) is updated. Executor 413 updates the metadata stored in DB server 630, based on the sale and purchase records of companies a through c (records of the weight of one truckload of resource in the past sale-and-purchase transactions), for example. Note that companies a through c may be sellers, buyers, or a mixture of sellers and buyers. Further, a comparison may be made between a record of a sale-and-purchase transaction involving a resource that is performed in the first unit (the price for one truckload of resource) and a record of a sale-and-purchase transaction involving a resource that is performed in the second unit (the price for a given weight of resource), so as to determine the market rate between the first unit and the second unit (the weight of one truckload of resource) and update the market rate metadata based on the market rate determined. For example, if one truckload of resource was sold and purchased for X yen and if 1000 kg of resource was sold and purchased for X yen, one truckload of the resource equals 1000 kg.

In addition, in the sale-and-purchase transaction involving a resource, executor 313 performs "IV: Payment to designated address" by making a payment in tokens (cryptocurrencies such as Bitcoin, or fiat currencies, for example), and transmits "V: Payment notification" to executor 213 when the payment is completed.

As described above, since the market rate for the weight of one truckload of resource is managed and updated based on sale and purchase records in third distributed ledger system 40, it is possible to perform a sale-and-purchase transaction involving a resource using an appropriate market rate even when two distributed ledger systems (that is, two blockchains) use different units for the resource transaction. Accordingly, when, for example, the seller submits a purchase request to the buyer, the market rate blockchain is referenced to check the compatibility between different units, thereby absorbing fluctuations in different values and enabling sale-and-purchase transactions to be performed at appropriate prices. The following describes the details with reference to FIG. 6 through FIG. 9.

First, an operation for registering an NFT for sale in first distributed ledger system 20 will be described with reference to FIG. 6. FIG. 6 is a sequence diagram illustrating an operation (an information processing method) for registering a sale NFT, performed in information processing system 10 according to the present embodiment. For example, the operation illustrated in FIG. 6 may be performed when a resource is collected or when one truckload of resource is collected, or may be performed periodically.

As illustrated in FIG. 6, seller terminal 110 generates a market rate DB reference request that requests reference to a market rate DB (for example, DB server 630 illustrated in FIG. 5) managed by third distributed ledger system 40, and transmits the market rate DB reference request to ledger server 400a (S10).

Next, executor 413 of ledger server 400a determines whether the market rate DB reference request has been received, and if executor 413 determines that the market rate DB reference request has been received, executor 413 transmits, to seller terminal 110, an ID of a market rate NFT, which is identification information of a market rate (a market rate NFT) between the first unit and the second unit corresponding to the traded item that seller terminal 110 is to sell (S20). The purpose of transmitting the ID of the market rate NFT to seller terminal 110 may be to allow the sale price to be finalized using the market rate at the time of sale, since the market rate is subject to constant fluctuation.

Note that executor 413 may receive the market rate DB reference request by receiving transaction data including the market rate DB reference request.

Next, seller terminal 110 generates, either automatically or in response to an operation or the like by the first user, a database (a sale DB) in which a collection of data relating to sales and purchases of resources is stored (S30). Seller terminal 110, for example, may generate the DB in storage device 201a, or may generate the DB in a PC owned by the seller (for example, DB server 610 or 620 illustrated in FIG. 5).

Next, seller terminal 110 generates metadata (first metadata) of a sale NFT that is for selling a resource and records the metadata in the sale DB (S40).

Next, seller terminal 110 transmits the address at which the metadata of the sale NFT is stored (the address in the sale DB) and a signature (a digital signature of the seller) to ledger server 200a (S50). For example, seller terminal 110 generates generation request transaction data that requests generation of a sale NFT and that includes the address and the signature, and transmits the generation request transaction data to ledger server 200a.

Next, in response to receiving the generation request transaction data transmitted in step S50, ledger manager 212 of ledger server 200a verifies the signature of the generation request transaction data. Specifically, ledger manager 212 verifies the signature included in the generation request transaction data by using the public key of the seller.

Ledger manager 212 determines whether the verification of the signature has been successful (whether the signature is valid) (S60), and stores the received generation request transaction data on distributed ledger 214a if the verification of the signature is determined to be successful (the signature is valid) (Yes in S60). Further, executor 213 generates transaction data including a sale NFT by using the generation request transaction data, and stores the generated transaction data on distributed ledger 214a. The transaction data including the sale NFT can be considered to be transaction data indicating generation of the sale NFT. When generating the sale NFT, executor 213 generates an ID of the sale NFT, which is identification information of the sale NFT (that is, identification information with which the NFT can be uniquely identified) (S70), and adds the ID to the sale NFT.

Next, executor 213 generates the sale NFT by storing, on distributed ledger 214a, the transaction data including the sale NFT to which the ID of the sale NFT has been added. That is, executor 213 registers the sale NFT by storing, on distributed ledger 214a, the transaction data including the sale NFT (S80). The sale NFT registered here is, for example, NFT-100 or NFT-200 illustrated in FIG. 5.

Next, executor 213 transmits the ID of the sale NFT to seller terminal 110 (S90). Seller terminal 110 may include, in the metadata of the sale NFT, the ID of the sale NFT received.

If the verification of the signature is determined to have failed (the signature is not valid) (No in S60), ledger manager 212 finishes the processing.

With reference to FIG. 7, the following describes an operation for registering an NFT for purchase in second distributed ledger system 30. FIG. 7 is a sequence diagram illustrating an operation (an information processing method) for registering an NFT for purchase, performed in information processing system 10 according to the present embodiment. For example, the operation illustrated in FIG. 7 may be performed when the seller submits a purchase request to the buyer, or may be performed periodically.

As illustrated in FIG. 7, buyer terminal 120 generates a market rate DB reference request that requests reference to the market rate DB (for example, DB server 630 illustrated in FIG. 5) managed by third distributed ledger system 40, and transmits the market rate DB reference request to ledger server 400a (S110).

Next, executor 413 of ledger server 400a determines whether the market rate DB reference request has been received, and if executor 413 determines that the market rate DB reference request has been received, executor 413 transmits, to buyer terminal 120, an ID of a market rate NFT, which is identification information of a market rate (a market rate NFT) between the first unit and the second unit corresponding to the traded item that buyer terminal 120 is to purchase (S120).

Note that executor 413 may receive the market rate DB reference request by receiving transaction data including the market rate DB reference request.

Next, buyer terminal 120 generates, either automatically or in response to an operation or the like by the second user, a database (a purchase DB) in which a collection of data relating to sales and purchases of resources is stored (S130). Buyer terminal 120, for example, may generate the DB in storage device 301a, or may generate the DB in a PC (for example, a server device) owned by the buyer.

Next, buyer terminal 120 generates metadata (second metadata) of a purchase NFT that is for purchasing a resource and records the metadata in the purchase DB (S140).

Next, buyer terminal 120 transmits the address at which the metadata of the purchase NFT is stored (the address in the purchase DB) and a signature (a digital signature of the buyer) to ledger server 300a (S150). For example, buyer terminal 120 generates generation request transaction data that requests generation of a purchase NFT and that includes the address and the signature, and transmits the generation request transaction data to ledger server 300a.

Next, in response to receiving the generation request transaction data transmitted in step S150, ledger manager 312 of ledger server 300a verifies the signature of the generation request transaction data. Specifically, ledger manager 312 verifies the signature included in the generation request transaction data by using the public key of the buyer.

Ledger manager 312 determines whether the verification of the signature has been successful (whether the signature is valid) (S160), and stores the received generation request transaction data on distributed ledger 314a if the verification of the signature is determined to be successful (the signature is valid) (Yes in S160). Further, executor 313 generates transaction data including a purchase NFT by using the generation request transaction data, and stores the generated transaction data on distributed ledger 314a. The transaction data including the purchase NFT can be considered to be transaction data indicating generation of the purchase NFT. When generating the purchase NFT, executor 313 generates an ID of the purchase NFT, which is identification information of the purchase NFT (that is, identification information with which the NFT can be uniquely identified) (S170), and adds the ID to the purchase NFT.

Next, executor 313 generates the purchase NFT by storing, on distributed ledger 314a, the transaction data including the purchase NFT to which the ID of the purchase NFT has been added. That is, executor 313 registers the purchase NFT by storing, on distributed ledger 314a, the transaction data including the purchase NFT (S180). The purchase NFT registered here is, for example, NFT-300 illustrated in FIG. 5.

Next, executor 313 transmits the ID of the purchase NFT to buyer terminal 120 (S190). Buyer terminal 120 may include, in the metadata of the purchase NFT, the ID of the purchase NFT received.

If the verification of the signature is determined to have failed (the signature is not valid) (No in S160), ledger manager 312 finishes the processing.

With reference to FIG. 8, the following describes an operation performed when a resource is sold and purchased. FIG. 8 is a sequence diagram illustrating an operation (an information processing method) for selling and purchasing a resource, performed in information processing system 10 according to the present embodiment. The operation illustrated in FIG. 8 is performed when a resource collected is sold in the real world.

As illustrated in FIG. 8, seller terminal 110 generates a market rate DB reference request that requests reference to a market rate DB (for example, DB server 630 illustrated in FIG. 5) managed by third distributed ledger system 40, and transmits the market rate DB reference request to ledger server 400a (S310).

Next, executor 413 of ledger server 400a determines whether the market rate DB reference request has been received, and if executor 413 determines that the market rate DB reference request has been received, executor 413 transmits an ID of a market rate NFT (that is, identification information with which the token can be uniquely identified) to seller terminal 110 (S320). Here, one or more buyers are present, and executor 413 transmits, to seller terminal 110, an ID of a market rate NFT that includes a market rate of each of the one or more buyers. One market rate NFT may include identification information of one or more buyers, or may include identification information of only one buyer. In the case where one market rate NFT includes identification information of only one buyer, a plurality of market rate NFTs may be present because a market rate NFT is present for each buyer. In this case, the IDs of the plurality of market rate NFTs may be transmitted to seller terminal 110. The metadata of each market rate NFT may include identification information with which the buyer can be uniquely identified. By obtaining the ID of the market rate NFT and the metadata corresponding to the ID, seller terminal 110 can obtain the identification information of the buyer included in the metadata.

Note that executor 413 may receive the market rate DB reference request by receiving transaction data including the market rate DB reference request.

Next, seller terminal 110 determines, based on the market rate NFT of each of one or more buyers, a buyer (a resource buyer) with whom a sale-and-purchase transaction involving a resource is to be performed, from among the one or more buyers (S330). For example, seller terminal 110 may determine, as the buyer with whom a sale-and-purchase transaction is to be performed, a buyer whose weight of one truckload is greatest.

Next, seller terminal 110 generates a sale NFT transfer request to request a transfer of the ownership of an NFT (here, a sale NFT) to the buyer determined, and transmits the sale NFT transfer request to ledger server 200a (S340). Here, the sale NFT transfer request is a request to execute processing to transfer the ownership of a token corresponding to the first unit (for example, one truckload of truck A). In the real world, this is equivalent to sale of a resource in one truckload of truck A from the seller to the buyer. Note that the sale NFT transfer request is an example of a purchase request submitted by the seller to the buyer.

Next, upon receiving the sale NFT transfer request, executor 213 transmits, to buyer terminal 120, the ID of the sale NFT that is requested to be transferred (that is, identification information with which the NFT can be uniquely identified) (S350).

Note that executor 213 may receive the sale NFT transfer request by receiving transaction data including the sale NFT transfer request.

Next, upon receiving the ID of the sale NFT and also the sale NFT on the basis of the ID, buyer terminal 120 executes processing to transfer the ownership of the purchase NFT (S360). Receiving the sale NFT may be, for example, a change of the owner of the sale NFT from the seller to the buyer. Accordingly, the ownership of the sale NFT is transferred from the seller to the buyer. That is, the buyer becomes the owner of the resource.

Buyer terminal 120 generates a purchase NFT transfer request that requests transfer of the ownership of an NFT (here, a purchase NFT) to the seller, and transmits the purchase NFT transfer request to ledger server 300a (S370). Here, the purchase NFT transfer request is a request to transfer the ownership of the purchase NFT corresponding to the second unit (for example, 1000 kg of resource). That is, the purchase NFT transfer request is a request to execute processing to pay consideration for the resource corresponding to the second unit from the buyer to the seller.

Note that in step S360, buyer terminal 120 may execute processing to transfer the ownership of a token (cryptocurrencies such as Bitcoin, or fiat currency, for example) to the seller instead of transferring the ownership of the purchase NFT.

Next, upon receiving the purchase NFT transfer request, executor 313 transfers the ownership of the purchase NFT to seller terminal 110 by, for example, changing the owner of the purchase NFT that is requested to be transferred, from the buyer to the seller (S380). Furthermore, executor 313 may, for example, transmit the ID of the purchase NFT to seller terminal 110.

For example, seller terminal 110 can obtain greater profit by selling the purchase NFT if the market rate rises after the ownership of the purchase NFT has been transferred.

With reference to FIG. 9, the following describes an operation for adjusting the market rate. FIG. 9 is a sequence diagram illustrating an operation (an information processing method) for adjusting the market rate, performed in information processing system 10 according to the present embodiment. For example, the operation illustrated in FIG. 9 may be performed periodically, or may be performed when the market rate DB reference request is received. In the case of performing the operation periodically, controller 415 of ledger server 400a may periodically generate transaction data (an example of predetermined transaction data) including at least one of the sale DB reference request or the purchase DB reference request, and store the transaction data in a blockchain (blockchain C).

As illustrated in FIG. 9, executor 413 of ledger server 400a generates a sale DB reference request that requests reference to the sale DB generated by seller terminal 110, and transmits the sale DB reference request to ledger server 200a (S410). Executor 413 may transmit a sale DB reference request that requests reference to the sale DB of each of a plurality of sellers. The sale DB reference request is a request to reference a sale transaction record of a resource sold by one or more sellers in a predetermined period. The sale transaction record includes, for example, a record of the price at which the one or more sellers have sold one truckload of resource. The amount of profit markup may differ for each seller. Thus, even sellers that referenced the same market NFT may have different records of the weight of one truckload of resource they have sold. The predetermined period may be the most recent period, for example.

Next, upon receiving the sale DB reference request, executor 213 transmits, to ledger server 400a, the ID of the sale NFT that is requested to be referenced (that is, identification information with which the NFT can be uniquely identified) (S420). Ledger server 400a obtains a sale transaction record of a resource corresponding to the ID of the sale NFT obtained from executor 213. By doing so, ledger server 400a can obtain a sale transaction record of a resource sold by one or more sellers. For example, the sale transaction record (for example, first metadata of the sale NFT) obtained in step S420 indicates a record of a transaction (a sale transaction) involving a resource that is performed using the sale NFT (an example of the first NFT) in which the unit for sale and purchase of a traded item is one truckload (an example of the first unit). The sale transaction record is an example of the first transaction record information. The sale transaction record is obtained via communication unit 411. Communication unit 411 functions as the first obtainer.

Note that executor 213 may receive the sale DB reference request by receiving transaction data including the sale DB reference request.

Note that the first metadata may include a market rate and information other than the market rate. In step S420, only the market rate included in the first metadata may be permitted to be obtained.

Note that the frequency and timing of the transmission of the sale DB reference request are not particularly limited.

Next, executor 413 of ledger server 400a generates a purchase DB reference request that requests reference to the purchase DB generated by buyer terminal 120, and transmits the purchase DB reference request to ledger server 300a (S430). Executor 413 may transmit a purchase DB reference request that requests reference to the purchase DB of each of a plurality of buyers. The purchase DB reference request is a request to reference a purchase transaction record of a resource purchased by one or more buyers in a predetermined period. The purchase transaction record includes, for example, a record of the weight of the resource the one or more buyers have purchased. The amount of profit markup may differ for each buyer. Thus, even buyers that referenced the same market NFT may have different records of the weight of one truckload of resource they have purchased. The predetermined period may be the most recent period, for example.

Next, upon receiving the purchase DB reference request, executor 313 transmits, to ledger server 400a, the ID of the purchase NFT that is requested to be referenced (that is, identification information with which the NFT can be uniquely identified) (S440). Accordingly, ledger server 400a can obtain a purchase transaction record of a resource purchased by one or more buyers. For example, the purchase transaction record obtained in step S440 indicates a record of a transaction (a purchase transaction) involving a resource that is performed using the purchase NFT (an example of the second NFT) in which the unit for sale and purchase of a traded item is weight (an example of the second unit). The purchase transaction record is an example of the second transaction record information. The purchase transaction record is obtained via communication unit 411. Communication unit 411 functions as the second obtainer.

Note that executor 313 may receive the purchase DB reference request by receiving transaction data including the purchase DB reference request.

Note that the second metadata may include a market rate and information other than the market rate. In step S440, only the market rate included in the second metadata may be permitted to be obtained.

Note that the frequency and timing of the transmission of the purchase DB reference request are not particularly limited. For example, the purchase DB reference request may be transmitted in synchronization with the transmission of the sale DB reference request, or may be transmitted independently of the transmission of the sale DB reference request.

Next, executor 413 updates the metadata of the market rate NFT, based on the ID of the sale NFT and the ID of the purchase NFT (S450). For example, executor 413 updates the market rate (that is, the market rate for the weight of one truckload of resource) included in the metadata, based on one or more sale transaction records and one or more purchase transaction records. For example, executor 413 may make a comparison between a record of a sale-and-purchase transaction involving a resource that is performed in the first unit (the price for one truckload of resource) and a record of a sale-and-purchase transaction involving a resource that is performed in the second unit (the price for a given weight of resource), so as to determine the market rate between the first unit and the second unit (the weight of one truckload of resource) and update the market rate metadata based on the market rate determined. For example, executor 413 may update the market rate included in the metadata, based on a weight obtained by statistically processing the weight of one truckload of resource included in one or more sale transaction records and the weight of one truckload of resource included in one or more purchase transaction records. The weight obtained by the statistical processing may be, for example, an average weight, a modal weight, a median weight, or a maximum or minimum weight.

Accordingly, the metadata of the market rate NFT can be updated based on a sale-and-purchase transaction involving a resource that is performed in a predetermined period (for example, the most recent period). That is, the metadata of the market rate NFT can be updated to an appropriate market rate according to the most recent sale and purchase.

Note that in step S450, it suffices so long as executor 413 determines the market rate between the first unit and the second unit, based on one or more sale transaction records and one or more purchase transaction records.

Note that ledger server 400a may reference only one of the sale transaction record or the purchase transaction record and update the market rate based on the reference result.

### (Various Data Structures and Execution of Smart Contract)

With reference to FIG. 10 through FIG. 14, the data structure of a distributed ledger, the execution of a smart contract, and the data structure of an NFT will be described.

FIG. 10 is an explanatory diagram illustrating the data structure of a blockchain, which is an example of the distributed ledger.

Blocks, which are recording units of a blockchain, are connected to form a chain. Each of the blocks includes a plurality of transaction data items and the hash value of the previous block.

FIG. 10 illustrates blocks B1, B2, and B3 included in the blockchain.

For example, block B2 includes the hash value of block B1, the previous block. The hash value of block B1 is a hash value calculated by computation performed on the content of block B1 according to a hash algorithm.

Block B3 includes, as the hash value of block B2, a hash value calculated from the plurality of transaction data items included in block B2 and the hash value of block B1.

Accordingly, the blockchain has the configuration in which the blocks each including the content of its previous block in the form of a hash value are connected to form a chain. Thus, the blockchain can effectively prevent tampering with the transaction data recorded.

If past transaction data is altered (in other words, tampered with), the hash value of the block including the transaction data differs from the value before the alteration. In this case, in order to make the block including the altered transaction data appear authentic, it is necessary to rebuild all the blocks following the block, which includes the altered transaction data, in the distributed ledger stored in each of a plurality of servers. This task is extremely difficult in reality. These characteristics can make it substantially impossible to tamper with the transaction data included in a blockchain.

Note that, to store transaction data on a blockchain, a node terminal (node) generates a block including the transaction data to be stored and executes processing based on a consensus algorithm for the generated block with the other nodes to reach a consensus with them. When the consensus is reached, the node performs control to store the block on the blockchain. In this manner, a plurality of nodes operating in an autonomous and distributed manner can connect a valid block to the blockchain. As the consensus algorithm, practical byzantine fault tolerance (PBFT) may be used, or proof of work (PoW), proof of stake (PoS), or the like may be used. Note that, in the case where Hyperledger fabric is used as an example of a distributed ledger technology, the consensus algorithm need not be executed.

FIG. 11 is an explanatory diagram illustrating a data structure of transaction data.

Transaction data illustrated in FIG. 11 includes transaction body BP1 and digital signature BP2 (also simply referred to as a signature). Transaction body BP1 is the data body included in the transaction data. Digital signature BP2 is generated by encrypting the hash value of transaction body BP1 using a signing key of the creator of the transaction data (in other words, a private key).

Using digital signature BP2 included in the transaction data, a node that has received the transaction data can verify whether transaction body BP1 is valid (in other words, whether it is not tampered with). This can make it substantially impossible to tamper with the data included in transaction body BP1. In addition, by storing the transaction data that has been successfully verified on a blockchain, it is possible to maintain the validity of the transaction data stored on the blockchain.

In the above-described manner, transaction data included in a blockchain are stored on the blockchain in such a manner that the transaction data are linked together using the hash values of the transaction data and the hash values of the blocks. As a result, the transaction data included in the blockchain are stored and maintained in a manner that is effectively tamper-proof. This is an advantage over a database or a distributed database in which a collection of data is simply stored.

FIG. 12 is an explanatory diagram illustrating transaction data relating to execution of a smart contract. FIG. 13 is an explanatory diagram illustrating processing relating to execution of a smart contract.

With reference to FIG. 12 and FIG. 13, a series of steps relating to the execution of the smart contract using a distributed ledger will be described.

In step SB1, a node stores, on distributed ledger B10, transaction data B11 including contract code B12 in which the processing of the smart contract is written. For example, the node obtains transaction data B11 by receiving transaction data B11 from a certain information processing device through communication or by generating transaction data B11 by itself, and stores obtained transaction data B11 on distributed ledger B10. Step SB1 is performed before the execution of the smart contract.

In step SB2, the node stores, on distributed ledger B10, transaction data B15 including instructions B16 to execute the smart contract. For example, the node receives transaction data B15 from a certain information processing device through communication and stores received transaction data B15 on distributed ledger B10.

In step SB3, in response to transaction data B15, which includes instructions B16, being stored on distributed ledger B10 in step SB2, the node reads contract code B12 from distributed ledger B10 and executes the processing based on contract code B12. The result of the processing can be included in transaction data and stored on distributed ledger B10.

By the above series of steps, upon receiving transaction data B15 including instructions B16 to execute the smart contract, the distributed ledger system executes the processing according to instructions B16 automatically (in other words, with no manual operations). Thus, it is possible to execute the processing with high efficiency (in other words, at high speed or in a short period of time). Achieving highly efficient processing brings about the advantageous effect of reduction in power consumption. In addition, dispensing with manual operations makes it possible to prevent the tampering with information or misconduct by a person, or human errors beforehand. Furthermore, since the result of the processing executed in such a manner is stored on a blockchain, it is substantially impossible to tamper with the result of the processing.

FIG. 14 is an explanatory diagram illustrating structures of an NFT and metadata. The NFT is a token stored on a distributed ledger. The NFT is a unique token (in other words, a non-fungible token). The NFT is standardized according to, but not limited to, for example, Ethereum Request for Comments (ERC) 721. The NFT may conform to a standard different from ERC-721, or may be non-standard (for example, specific to an organization). Note that although ERC-721 is a standard for unique tokens, the NFTs described in the present Specification need not necessarily be unique tokens.

FIG. 14 illustrates transaction data B21 stored on a distributed ledger. Transaction data B21 stores an NFT. The NFT includes a token ID (that is, identification information with which the NFT can be uniquely identified) and a uniform resource identifier (URI) of metadata.

The NFT includes metadata. The metadata can be arranged at a location accessible via a network (for example, storage device B22). The URI of the metadata indicating the location of the metadata can be calculated using the token ID of the NFT and a predetermined base URI.

Information managed as the NFT may be included in transaction data B21, or may be included in the metadata. The inclusion of the information managed as the NFT in the metadata provides such an advantage that the amount of information included in transaction data B21 (in other words, information included in a blockchain) can be reduced. In this case, the metadata can be considered to contain the actual conditions of the information managed as the NFT. In the case where an image is managed in the form of an NFT, a uniform resource locator (URL) indicating image data of the image can be managed as the NFT.

Note that each of the constituent elements in the embodiment described above may be configured in the form of an exclusive hardware product, or may be implemented by executing a software program suitable for the constituent element. Each of the constituent elements may be implemented by means of a program executor, such as a CPU or a processor, reading and executing the software program recorded on a recording medium such as a hard disk or a semiconductor memory.

### [Other Embodiments]

Hereinbefore, an information processing method and the like according to one or more aspects have been described based on an exemplary embodiment, but the present disclosure is not limited to this embodiment. Various modifications of the present embodiment as well as forms resulting from combinations of constituent elements in different embodiments that may be conceived of by those skilled in the art may be included within the present disclosure so long as such modifications and forms do not depart from the essence of the present disclosure.

For example, the above embodiment has described determining a market rate for two units in the case where a difference exists between the unit of token in a blockchain used by a seller and the unit of token in a blockchain used by a buyer. However, the technique according to the present disclosure may be used for determining, for example, a market rate for units of token between blockchains used by a plurality of sellers or a market rate for units of token between blockchains used by a plurality of buyers. For example, when a first seller and a second seller are present where the first seller uses a first blockchain in which the first unit is used and the second seller uses a second blockchain in which the second unit different from the first unit is used, the information processing method according to the present disclosure may determine a market rate for the first unit and the second unit. This makes it possible to align units of token between sellers or between buyers.

Further, although the blockchain is used in the above embodiment, the blockchain need not be used. For example, technologies are not limited to blockchain, and distributed ledger technologies such as Hashgraph may also be used.

Further, the above embodiment has illustrated an example in which the first metadata and the second metadata are each stored in a database; however, the present disclosure is not limited to this example, and at least one of the first metadata or the second metadata may be stored in a database.

In addition, for example, each device in the above embodiment is specifically a computer system including a microprocessor, ROM, RAM, a hard disk unit, a display unit, a keyboard, a mouse, and the like. A computer program is recorded on the RAM or hard disk unit. Each device achieves the functions thereof by the microprocessor operating in accordance with the computer program. Here, the computer program is constituted by a combination of a plurality of instruction codes that indicate instructions given to a computer to achieve a predetermined function.

In addition, for example, some or all of the constituent elements of the devices in the above embodiment may be implemented using a single large-scale integration (LSI) circuit. A system LSI circuit refers to a super multifunctional LSI circuit produced by integrating multiple constituent elements on a single chip, and specifically, refers to a computer system including a microprocessor, ROM, RAM, and the like. A computer program is recorded on the RAM. The system LSI circuit achieves the functions thereof by the microprocessor operating in accordance with the computer program. System LSI circuits herein may also be referred to as integrated circuits (ICs), LSI circuits, super LSI circuits, or ultra LSI circuits depending on the degree of integration. Moreover, the manner in which the circuit integration is achieved is not limited to LSI, and it is also possible to use a dedicated circuit or a generic processor.

Further, for example, the present disclosure may be the methods described above. Furthermore, the present disclosure may be a computer program for implementing these methods with a computer, or a digital signal of the computer program. For example, an aspect of the present disclosure may be a computer program that causes a computer to execute each characteristic step included in the information processing method illustrated in any of FIG. 6 through FIG. 9, or FIG. 13.

In addition, the present disclosure may also be a computer program or a digital signal recorded on a computer-readable recording medium such as a flexible disk, a hard disk, a CD-ROM, a magneto-optical disk (MO), a digital versatile disc (DVD), a DVD-ROM, a DVD-RAM, a Blu-ray (registered trademark) Disc (BD), or semiconductor memory. The present disclosure may also be the digital signal recorded on these recording media.

In addition, the present disclosure may transmit the computer program or the digital signal via, for example, a telecommunication line, a wireless or wired communication line, a network such as the Internet, or data broadcasting.

In addition, the order in which the steps in the flowchart and the sequence diagrams are executed is a mere example given for specifically describing the present disclosure, and the order may be different from those described above. Furthermore, some of the steps described above may be executed simultaneously (in parallel) with other steps, and some of the steps described above may not be executed.

In addition, the divisions of the functional blocks in the block diagrams are mere examples, and a plurality of functional blocks may be implemented as a single functional block, a single functional block may be divided into a plurality of functional blocks, and some functions may be transferred to other functional blocks. Furthermore, the functions of a plurality of functional blocks having similar functions may be processed by a single hardware or software product in a parallelized or time-divided manner.

In addition, for example, each ledger server according to the above embodiment may be implemented as a single device, or may be implemented using a plurality of devices. In the case of implementing a ledger server using a plurality of devices, the constituent elements of the ledger server may be allocated to the plurality of devices in any manner. In the case of implementing a ledger server using a plurality of devices, the method of communication between the plurality of devices is not particularly limited; it may be wireless communication or may be wired communication. The devices may communicate with each other using a combination of wireless communication and wired communication.

### [Industrial Applicability]

The present disclosure is useful in an information processing device and the like that store data on a distributed ledger.

### [Reference Signs List]

10 information processing system
20 first distributed ledger system
30 second distributed ledger system
40 third distributed ledger system
110 seller terminal
120 buyer terminal
200a, 200b, 200c, 300a, 300b, 300c, 400a, 400b, 400c ledger server (information processing device)
201a, 201b, 201c, 301a, 301b, 301c, 401a, 401b, 401c, B22 storage device
211, 311, 411 communication unit (first obtainer, second obtainer)
212, 312, 412 ledger manager
213, 313, 413 executor
214, 222, 314, 414 storage
214a, 314a, 414a, B10 distributed ledger
221 communication unit
415 controller
500 communication network
610, 620, 630 DB server
B1, B2, B3 block
B11, B15, B21 transaction data
B12 contract code
B16 instruction
BP1 transaction body
BP2 digital signature

## Claims

1. An information processing method comprising:
obtaining first transaction record information indicating a record of a transaction involving a transaction item that is performed using a first non-fungible token (NFT), the first NFT indicating that the transaction involving the transaction item is to be performed in a first unit;
obtaining second transaction record information indicating a record of a transaction involving the transaction item that is performed using a second NFT, the second NFT indicating that the transaction involving the transaction item is to be performed in a second unit different from the first unit; and
determining a market rate between the first unit and the second unit, based on the first transaction record information and the second transaction record information.

2. The information processing method according to claim 1, wherein
the first unit is a unit used when selling the transaction item, and
the second unit is a unit used when purchasing the transaction item.

3. The information processing method according to claim 2, further comprising:
referencing at least one of a first blockchain or a second blockchain, the first blockchain storing information relating to the transaction involving the transaction item that is performed in the first unit, the second blockchain storing information relating to the transaction involving the transaction item that is performed in the second unit; and
updating the market rate, based on a result of the referencing.

4. The information processing method according to claim 2 or 3, wherein
the first NFT for the transaction involving the transaction item includes first metadata that includes information relating to a first market rate,
the second NFT for the transaction involving the transaction item includes second metadata that includes information relating to a second market rate, and
at least one of the first metadata or the second metadata is stored in a database.

5. The information processing method according to claim 4, wherein
the first metadata includes the first market rate and information other than the first market rate,
the second metadata includes the second market rate and information other than the second market rate,
in the obtaining of the first transaction record information, only the first market rate included in the first metadata is permitted to be obtained, and
in the obtaining of the second transaction record information, only the second market rate included in the second metadata is permitted to be obtained.

6. The information processing method according to any one of claims 1 to 3, wherein
the determining of the market rate is performed after generating predetermined transaction data and storing the predetermined transaction data in a third blockchain that stores information relating to the market rate, the generating and the storing being performed by a node terminal of a distributed ledger system that uses the third blockchain.

7. The information processing method according to any one of claims 1 to 3, wherein
the market rate is referenced when a transaction request that requests a transaction involving the transaction item is transmitted.

8. An information processing device comprising:
a first obtainer that obtains first transaction record information indicating a record of a transaction involving a transaction item that is performed using a first non-fungible token (NFT), the first NFT indicating that the transaction involving the transaction item is to be performed in a first unit;
a second obtainer that obtains second transaction record information indicating a record of a transaction involving the transaction item that is performed using a second NFT, the second NFT indicating that the transaction involving the transaction item is to be performed in a second unit different from the first unit; and
an executor that executes processing to determine a market rate between the first unit and the second unit, based on the first transaction record information and the second transaction record information.

9. A program for causing a computer to execute the information processing method according to any one of claims 1 to 3.
